# EUROPEAN PATENT SPECIFICATION

(11) **EP 4 421 950 B1**
(45) Date of publication and mention of the grant of the patent: **31.12.2025**
(21) Application number: 23831937.0
(22) Date of filing: 29.06.2023
(51) Int. Cl.: H01M 10/6568, H01M 10/6556, H01M 10/613, H01M 10/625, H01M 50/249, H01M 50/209

(54) **BATTERY PACK**
BATTERIEPACK
BLOC-BATTERIE

(30) Priority: 01.07.2022 KR 20220081128
(43) Date of publication of application: 28.08.2024
(73) Proprietor: LG Energy Solution, Ltd., Seoul 07335 (KR)
(72) Inventor: KIM, Dae Gil, Daejeon 34122 (KR); LEE, Jae Hyun, Daejeon 34122 (KR); SHIN, Ju Hwan, Daejeon 34122 (KR); LEE, Hyoung Suk, Daejeon 34122 (KR)
(74) Representative: Plasseraud IP
(86) International application number: PCT/KR2023/009174
(87) International publication number: WO 2024/005579

(56) References cited:
- EP-A1- 3 570 365
- JP-A- 2017 215 057
- JP-A- 2017 215 057
- JP-A- 2020 167 132
- JP-A- 2020 167 132
- KR-A- 20150 081 514
- KR-A- 20180 083 140
- KR-A- 20220 014 027
- KR-B1- 101 947 887

## Description

### [Technical Field]

The present invention relates to a battery pack, and more specifically, the battery pack of the present invention provides a pack case having a structure of maximizing the cooling efficiency of accommodated battery module using coolant that flows inside.

This application claims the benefit of priority from Korean Patent Application No. 10-2022-0081128, filed on July 1, 2022.

### [Background Art]

An operating voltage of the unit secondary battery cell is about 2.5V to 4.2V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the charge/discharge capacity.

For example, when a plurality of battery cells is connected in series or in parallel to configure a battery pack, it is common to configure a battery module composed of a plurality of battery cells first.

A conventional battery pack comprises a pack case in which battery modules are accommodated, and a top cover coupled to the pack case to cover the battery modules accommodated in the pack case.

The pack case may be formed with an inner space surrounded by side walls, and a plurality of battery modules are separately accommodated in a section formed by a plurality of separation walls.

Recently, the demand for large-capacity battery packs applied to electric vehicles, etc. has been increasing.

The battery modules included in a large capacity battery pack such as the above may have performance largely determined according to temperature, and the temperature of each of the battery modules may increase during charging and discharging. In other words, the battery pack may include a plurality of battery modules, and the plurality of battery modules may preferably be managed so that the temperature difference among them is minimized.

The electric vehicle may be equipped with a battery cooling device that cools each of the battery modules accommodated in the battery pack to prevent overheating of these battery modules and thereby maintain the performance of the battery modules.

A representative battery cooling device is a water-cooled battery cooling device. The water-cooled cooling device operates on the principle of cooling each battery module by supplying water cooled to a low temperature to the battery pack in which the battery modules are accommodated.

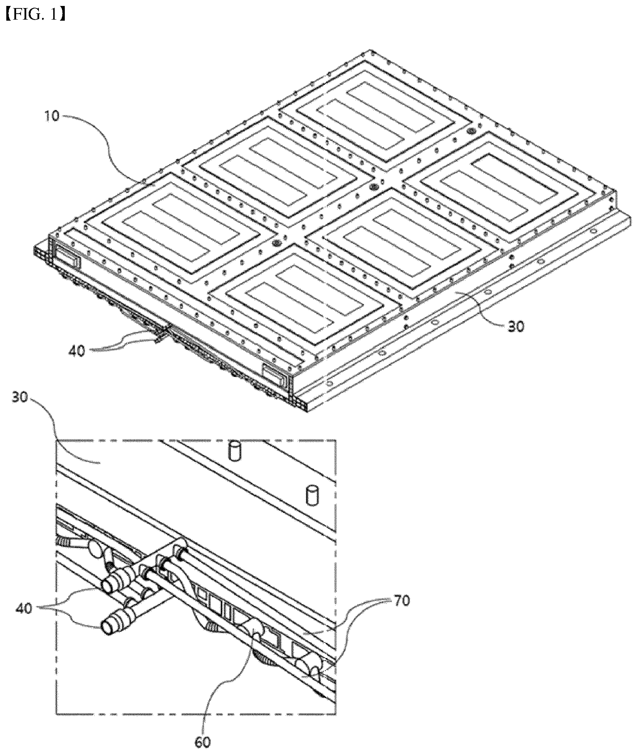

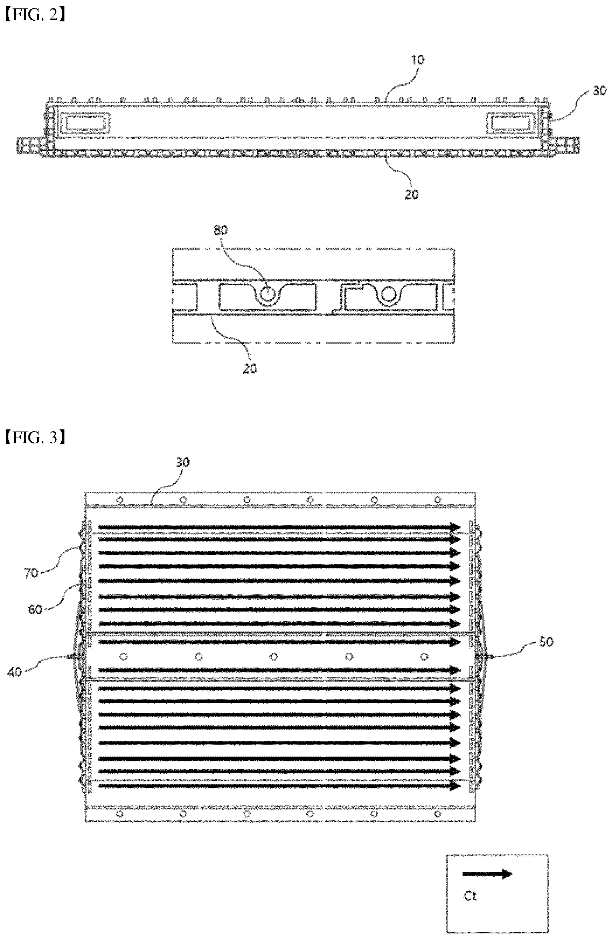

FIG. 1 is a perspective view of a battery pack applied to an electric vehicle with a water-cooled cooling device, and FIG. 2 is a front view of the battery pack of FIG. 1. Since each battery module included in the battery pack, as shown in FIGS. 1 and 2, is accommodated in a nearly enclosed space by the top cover 10 covering the top of the battery pack and the side walls 30 covering the sides the battery pack operates in an environment that is highly vulnerable to heating.

Therefore, in order to cool the battery module, conventional methods have been used to allow coolant to flow to a base plate 20 corresponding to the bottom of the battery pack.

Referring to FIGS. 1 and 2, the base plate 20, which corresponds to the lower part of the battery pack, has a plurality of tube-shaped flow paths 80 installed therein, and the low-temperature coolant injected through the inlet 40 is divided into a plurality of hoses 70 connected to the inlet 40, and then moves to each flow path 80 through the auxiliary inlet 60 connected to the hoses 70.

FIG. 3 is a brief diagram of the path Ct that coolant flows through the flow paths 80 in the battery pack of FIG. 1. Referring to FIG. 3, coolant is introduced into each of the auxiliary inlets 60 and flows in one direction through the channels 80 associated with the auxiliary inlets 60 to cool the battery modules accommodated in the battery pack, and is discharged through the outlet 50.

However, a battery pack having the above structure has the disadvantage of complicated assembly, requiring a process of connecting inlets, outlets, hoses, auxiliary inlets, and flow channels.

In addition, the cross-section of the flow channel is a round shape, and there is a disadvantage that the area in contact with the battery module actually accommodated in the battery pack is less, thereby not performing effective cooling.

Therefore, there is a need for a battery pack with a new structure that can improve cooling efficiency while improving assembling because the structure is simple.

### [Related Art Document]

Korean Laid-open Patent No.10-2018-0083140
European Patent No. 3570365A1.
Japanese Patent No 2020167132A.
Japanese Patent No 2017215057A.

### [Disclosure]

### [Technical Problem]

Therefore, the present invention was conceived to solve the above problems, and aims to provide a battery pack having a structure capable of effectively cooling a battery module accommodated therein.

Other objects and advantages of the present invention will be understood from the following description and will become apparent from the embodiments of the present invention. It will also be easily seen that the objects and advantages of the present invention may be realized by the means and combinations thereof disclosed in the claims of the patent.

### [Technical Solution]

According to the present invention, a battery pack for accommodating battery modules, including a pack case that includes a module area in which the battery modules are mounted, and the pack case including a base plate in the form of a hollow shape and having a plurality of space parts formed therein to support a lower part of a battery module and in which coolant is stored; sidewalls coupled to a rim of the base plate; and a separation wall coupled to the base plate to separate the battery modules from each other; the separation wall comprising: a main separation wall extended and formed across the centered part of the pack case, wherein the base plate includes at both ends an inlet and an outlet through which coolant can flow in and out and connected to the space part, respectively,, wherein the base plate further includes a flow path part, and wherein the flow path part is located between a pair of adjacent space parts and includes a plurality of cooling flow paths connecting the space parts to each other.

The coolant injected into the inlet may be discharged through the space part and the cooling flow path to the outlet.

The space parts may be formed separate at predetermined intervals along the length of the pack case.

The base plate includes an injection part including a space part formed at a front end of the base plate and directly connected to the injection part, a discharge part including a space part formed at a rear end of the base plate and directly connected to the outlet, and a temperature exchange part including a plurality of space parts formed at locations corresponding to each module area.

Each of the space parts included in the temperature exchange part may be formed corresponding to an area size of the module area.

Any one of the space parts included in the temperature exchange part may be connected with respective cooling flow paths included in the flow path parts located at both ends of the space part, and the coolant flowing through the respective cooling flow paths of the flow path parts located at the front end of the space part may be joined in the space part, and the coolant joined in the space part may be dispersed and moved to the respective cooling flow paths of the flow path parts located at the rear end of the space part.

Coolant injected into the space part of the injection part through the inlet may be dispersed and moved to the respective cooling flows of the flow path parts adjacent to the space part of the injection part, and coolant moved through the respective cooling flows of the flow path parts adjacent to the space part of the discharge part may be joined in the space part of the discharge part and discharged through the outlet.

The space parts and flow path parts may be formed alternately along the length direction of the pack case.

The pack case may further include a sub-separation wall, which is coupled at both ends to the main separation wall and side wall and coupled to the base plate to separate between a pair of adjacent battery modules; and the flow path parts may be included at locations corresponding to the sub-separation wall.

The flow path parts may include a plurality of cooling flow paths, and the cooling flow paths included in the flow path parts may be arranged side by side along a width direction of the pack case.

The base plate may include a pair of inlets at a front end and a pair of outlets at a rear end connected to each of the inlets.

The inlet including a first inlet formed on one side of the main-separation wall wherein the first module area is located, and a second inlet formed on the other side of the main-separation wall wherein the second module area is located, and the outlet including a first outlet connected to the first inlet on one side of the main-separation wall, and a second outlet connected to the second inlet on the other side of the main-separation wall, wherein the first inlet may be positioned diagonally to the first outlet on one side of the main-separation wall, and the second inlet may be positioned diagonally to the second outlet on the other side of the main-separation wall.

The base plate may include a cooling cover having an open front and rear side and coupled to the open front and rear sides.

The cooling cover may further include protrusions projecting forward, having a hollow shape, and the inlet and outlet may be installed in the protrusion parts of the cooling cover coupled to the front and rear sides of the pack case.

### [Advantageous Effects]

According to the present invention, a plurality of battery modules accommodated in a battery pack can be effectively cooled to prevent the battery pack from overheating and explosion.

### [Brief Description of the Drawings]

FIG. 1 is a perspective view of a battery pack applied to an electric vehicle with a conventional water-cooled cooling system.
FIG. 2 is a front view of the battery pack of FIG. 1.
FIG. 3 is an illustration of a path for coolant to move through a flow path in the battery pack of FIG. 1.
FIG. 4 is a perspective view of a battery pack according to a first embodiment of the present invention.
FIG. 5 is a modified embodiment of the battery pack shown in FIG. 4.
FIG. 6 is a front view of the battery pack of FIG. 4.
FIG. 7 is a top view of a pack case of the present invention.
FIG. 8 is an illustration of cooling flow paths and space parts inside the base plate corresponding to the first module area and the second module area in the pack case of FIG. 7.
FIG. 9 is a partial cross-sectional view of the pack case of FIG. 7.
FIG. 10 illustrates a movement path of the coolant through the cooling flow path and space parts of FIG. 8.
FIG. 11 is a perspective view of a battery pack according to a second embodiment of the present invention.
FIG. 12 is a partial view of a cooling cover with the protrusion part.

### [Detailed Description of the Preferred Embodiments]

Since the embodiments of the present invention are provided to illustrate the invention more fully to those of ordinary skill in the art, the shapes and sizes of the components in the drawings may be exaggerated, omitted, or shown schematically for clarity. Accordingly, the dimensions or proportions of each component are not necessarily indicative of actual dimensions or proportions.

The present invention relates to a battery pack 1000 accommodating a battery module B. More specifically, the battery pack 1000 of the present invention is characterized in that it includes a pack case 200 capable of effectively cooling the accommodated battery module B. The pack case 200 is provided in the present invention.

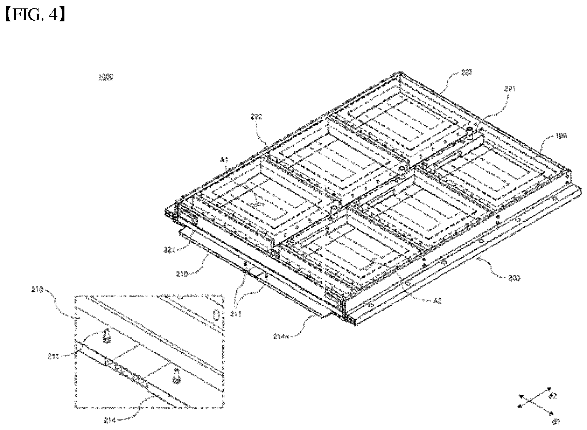

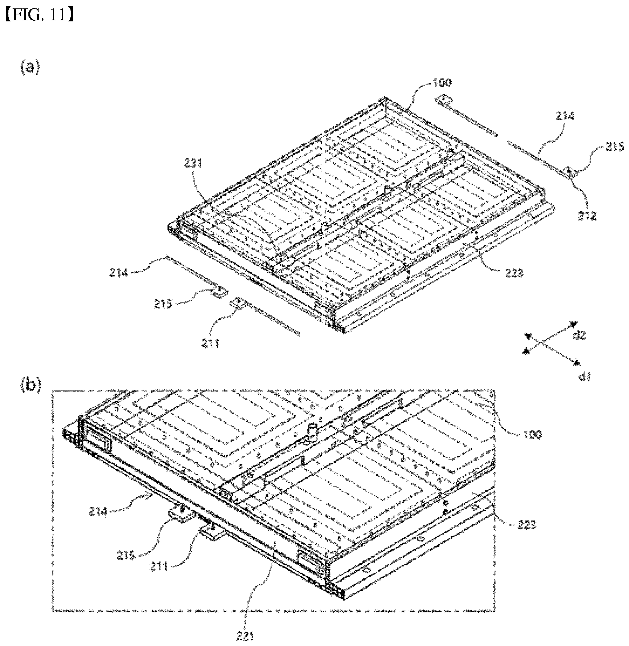

FIGS. 4 to 10 relate to a battery pack (1000) according to a first embodiment of the present invention, and FIGS. 11 to 13 relate to a battery pack (1000) according to a second embodiment of the present invention.

Hereinafter, the battery pack 1000 of the present invention will be described with reference to the above drawings.

### (first embodiment)

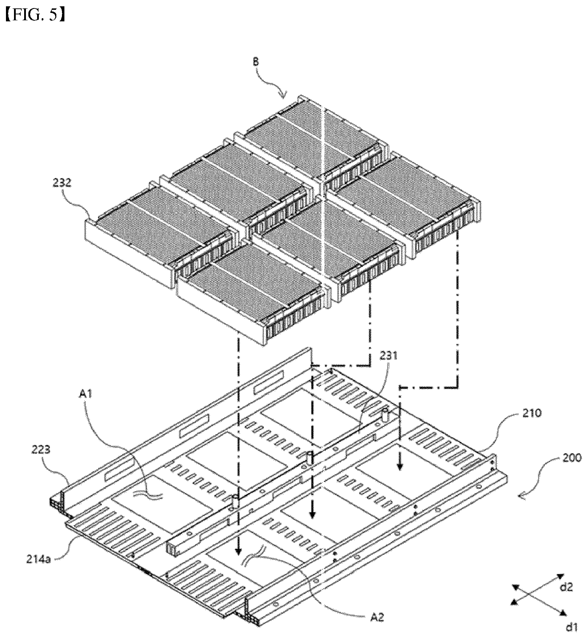

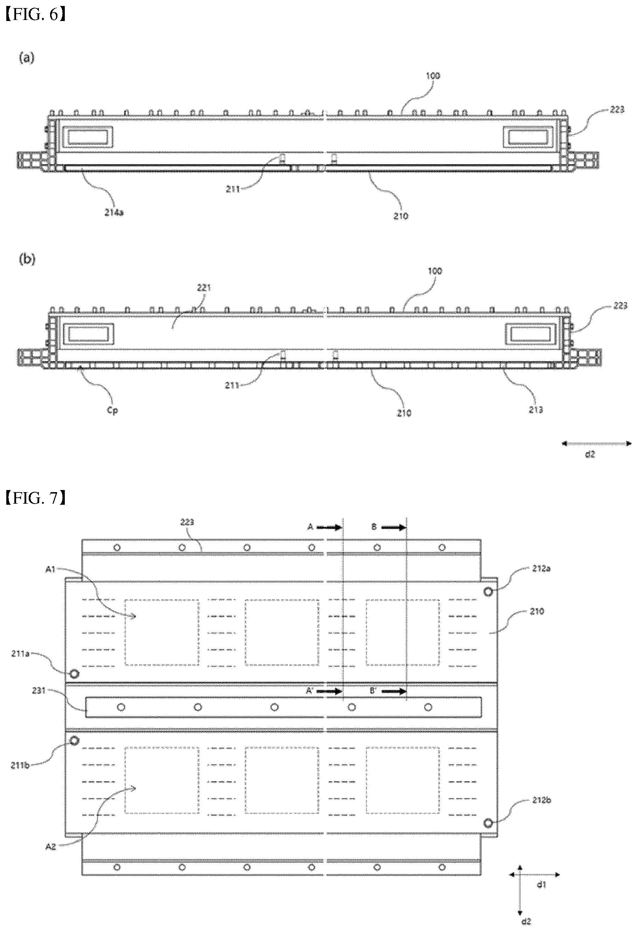

FIG. 4 is a perspective view of a battery pack according to a first embodiment of the present invention. FIG. 5 is a modified embodiment of the battery pack shown in FIG. 4. FIG. 6 is a front view of the battery pack of FIG. 4.

The battery pack 1000 of the present invention, as shown in FIG. 4 includes a pack case 200 and a top cover 100.

The top cover 100 is coupled with the pack case 200 to cover the top of each battery module B accommodated in the pack case 200.

Since the top cover 100 corresponds to the known art, a detailed description thereof will be omitted herein.

The pack case 200 includes a base plate 210, sidewall and separation wall 230, and provides a module area A in which a battery module B is mounted.

The sidewalls are coupled along a rim of the base plate 210.

More specifically, the sidewalls include a front frame 221 coupled to the base plate 210 to cover the front of the base plate 210, a rear frame 222 coupled to the base plate 210 to cover the rear of the base plate 210, and side frames 223 coupled on both sides of the base plate 210 to cover the sides of the base plate 210.

The battery pack (1000) according to a first embodiment of the present invention has a front end of the base plate (210) projecting toward the front of the front frame (221) and a rear end of the base plate (210) projecting toward the rear of the rear frame (222).

More specifically, the front frame 221 is coupled to the base plate 210 at a position predetermined spaced apart from the front end of the base plate 210 such that the front end of the base plate 210 can project forwardly of the front end of the front frame 221.

Further, the rear frame 222 is coupled with the base plate 210 at a predetermined spaced position from the rear end of the base plate 210 such that the rear end of the base plate 210 can project toward the front of the rear frame 222.

The separation wall is coupled to the base plate 210 to separate a module area A in which each battery module B is mounted.

More specifically, the separation walls includes a main-separation wall 231 formed to extend across the center part of the pack case 200.

The pack case 200 may be largely separated into two spaces by each of the main-separation wall 231, and a plurality of battery modules B may be mounted on the base plate 210 side by side along the main-separation wall 231 on both sides of the main-separation wall 231. At this time, the battery modules B accommodated on one side of the main-separation wall 231 may be further separated by the sub-separation wall 232.

In other words, the pack case 200, as shown in FIG. 4 may further include a sub-separation wall 232 that separates the space formed by the main-separation wall 231 in the length direction d1 of the pack case 200 to form a module area A in which the battery module B is mounted.

The sub-separation wall 232 may be installed in the pack case 200 separately from the battery module B, but may be provided attached to the battery module B in another embodiment.

FIG. 5 is a perspective view of the pack case 200 accommodating battery modules B with sub-separation wall 232 attached on both sides, wherein each battery module B is separated and supported by a sub-separation wall 232 attached to a side of the battery module B as the battery module B is mounted in each module area A.

The base plate (210) is characterized in that it has a hollow shape, supports the lower part of the battery module (B), and includes inside a plurality of space parts (Cv) in which the coolant is stored.

The base plate 210 includes a cooling cover 214, which is open at the front and rear sides, and is coupled to cover the openings with the open front and rear sides.

FIG. 6(a) is a battery pack 1000 with the cooling cover 214 coupled, and FIG. 6(b) is a battery pack 1000 with the cooling cover 214 detached.

The cooling cover 214 may be divided into a first cooling cover 214a coupled to the front side of the base plate 210 and a second cooling cover coupled to the rear side of the base plate 210.

The inside of the base plate 210 is hollow, as shown in FIG. 6, and a plurality of separation walls 213 are formed inside the hollow, which are built up in the direction of the thickness of the base plate 210. The cooling cover 214 is coupled with the base plate 210 so as to cover the open front and rear sides of the base plate 210. In this case, the cooling cover 214 may be separately detachable from the base plate 210 as shown or may be integrally manufactured with the base plate 210.

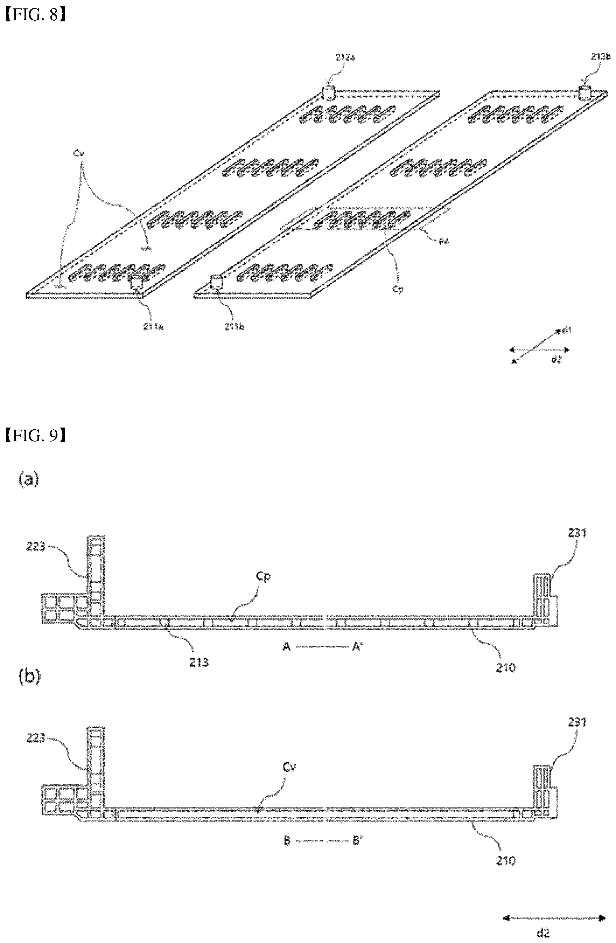

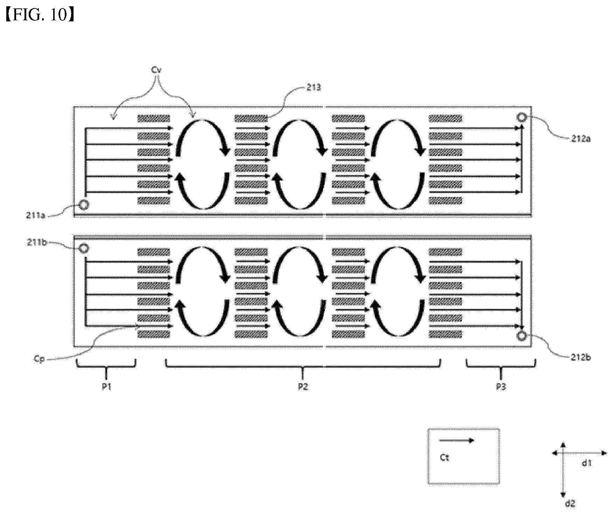

FIG. 7 is a top view of a pack case of the present invention. FIG. 8 is an illustration of cooling flow paths and space parts inside the base plate corresponding to the first module area and the second module area in the pack case of FIG. 7. FIG. 9 is a partial cross-sectional view of the pack case of FIG. 7. FIG. 10 illustrates a movement path of the coolant through the cooling flow path and space parts of FIG. 8.

The first module area A1 and the second module area A2 are formed at predetermined intervals spaced apart along the length direction d1 of the pack case 200 on both sides of the main-separation wall 231, and each battery module B is mounted in the respective module area A.

The battery pack 1000 of the present invention is characterized in that it effectively cools the battery modules B accommodated therein, the cooling being accomplished by allowing coolant to flow inside a base plate 210 included in the pack case 200.

In particular, the present invention forms a plurality of space parts Cv inside the base plate 210 to maximize the cooling effect, and enables the coolant to exchange temperature with the battery module B through a large area of the space part Cv.

The space part Cv is formed at predetermined intervals spaced apart along the length direction d1 of the pack case 200, same as the module area A.

The base plate 210 of the present invention further includes an inlet 211, an outlet 212, and a flow path part P4 in addition to the space part Cv.

Referring to FIGS. 4 to 7, wherein the inlet 211 and outlet 212 are portions at which coolant flows in and out, the base plate 210 includes an inlet 211 and an outlet 212, respectively, at both ends. More specifically, the inlet 211 is installed at the front end of the base plate 210 protruding a predetermined length from the front frame 221, and the outlet 212 is installed at the rear end of the base plate 210 protruding a predetermined length from the rear frame 222.

Coolant injected into the base plate 210 to cool the battery module B enters the inside of the base plate 210 through the inlets 211 and discharges to the outside through the outlet 212 connected to the inlet 211.

The base plate 210 includes a pair of inlets 211 at a front end and a pair of outlets 212 at a rear end connected to each of the inlet 211.

Referring to FIG. 7, a pair of inlets 211 are separately located at the front end of the base plate 210 across the main-separation wall 231, and a pair of outlets 212 are separately located at the rear end of the base plate 210.

More specifically, the inlets 211 include a first inlet 211a formed on one side of the main-separation wall 231 where the first module area A1 is located and a second inlet 211b formed on the other side of the main-separation wall 231 where the second module area A2 is located.

Further, the outlet 212 includes a first outlet 212a formed on one side of the main-separation wall 231 where the first module area A1 is located and a second outlet 212b formed on the other side of the main-separation wall 231 where the second module area A2 is located.

Each of the connected inlets 211 and outlets 212 is preferably positioned diagonally to each other on the base plate 210.

More specifically, the first inlet 211a is installed in a diagonal direction with respect to the first outlet 212a on one side of the main-separation wall 231, and the second inlet 211b is installed in a diagonal direction with respect to the second outlet 212b on the other side of the main-separation wall 231.

The first inlet 211a and second inlet 211b are installed at a position adjacent to the main-separation wall 231 at the front end of the base plate 210, respectively and the first outlet 212a and second outlet 212b are installed at a position adjacent to the side frames 223 located on both sides of the base plate 210 at the rear end of the base plate 210, respectively.

The flow path part P4 is located between a pair of adjacent space parts Cv, and includes a plurality of cooling flow paths connecting the space parts Cv to be connected to each other.

Referring to FIG. 8, the cooling flow paths are formed to extend along the length direction d1 of the pack case 200, and the plurality of cooling flow paths included in the flow path part P4 are arranged side by side along the width direction d2 of the pack case 200.

The flow path part P4 is located between the space parts Cv separated at predetermined intervals along the length direction d1 of the pack case 200. Therefore, coolant can move from one of the space parts Cv to the other space part Cv through the cooling flow paths included in the flow path part P4.

The coolant injected into the inlet 211 is discharged to the outlet 212 through the space part Cv and the cooling flow path.

The flow path part P4 is formed corresponding to a location of a boundary point position between a pair of adjacent module areas A. More specifically, the flow path parts P4 are formed in a position corresponding to the sub-separation wall 232 installed at the boundary points of the module areas A.

In FIG. 9, a cross-sectional view cutting a position between a pair of module areas A in the pack case 200 of FIG. 7 and a cross-sectional view cutting the module areas A are shown, respectively.

Referring to FIG. 9(a), in the cross-section of the pack case 200 with the position between the pair of module areas A being cut, a plurality of separation walls 213 formed at predetermined intervals along the width direction d2 of the pack case 200 and a plurality of cooling flow paths formed between the separation walls 213 are formed.

In other words, each cooling flow path included in the above one flow path part P4 is formed by a separation wall 213 formed to be spaced apart by a predetermined interval in the inner hollow of the base plate 210, that is, one cooling flow path is formed by an adjacent pair of separation walls 213.

Also, referring to the FIG. 9(b), in the cross-section of the pack case 200 with the module area A location to be cut, one space part Cv is formed between the side frame 223 and the main-separation wall 231.

The coolant flowing through each of the cooling flow paths in FIG. 9(a) is joined in the space part Cv in FIG. 9(b) connected to the cooling flow paths, and the large area of the space part Cv cools the battery module B mounted in the module area A corresponding to the space part Cv.

The space parts Cv are formed on each side of the base plate 210 based on the main-separation wall 231, and are formed corresponding to the positions of the module areas A along the length direction d1 of the pack case 200.

Therefore, the space part Cv and the flow path part P4 formed on one side of the main-separation wall 231 are formed alternately with each other along the length direction d1 of the pack case 200.

According to FIG. 10, the inside of the base plate 210 is divided into three main sections, that is, the base plate 210 includes an injection part P1, a discharge part P3, and a temperature exchange part P2.

The injection part P1 includes a space part Cv formed at the front end of the base plate 210 and directly connected to the inlet 211.

The coolant flowed into the space part Cv of the injection part P1 through the inlet 211 is dispersed and moved to each cooling oil in the flow path part P4 adjacent to the space part Cv of the injection part P1, as shown in FIG. 10.

The discharge part P3 includes a space part Cv formed at the rear end of the base plate 210 and directly connected to the outlet 212.

The coolant that has moved through each coolant flow path of the flow path part P4 adjacent to the space part Cv of the discharge part P3 is joined at the space part Cv of the discharge part P3 and discharged through the outlet 212.

The temperature exchange part P2 is located between the injection part P1 and the discharge part P3, and includes a plurality of space parts Cv formed at positions corresponding to the respective module areas A.

Since each space part Cv included in the temperature exchange part P2 is formed for the purpose of cooling each battery module (B) installed in the corresponding module area (A) through the largest possible surface area, so it is preferably formed corresponding to the area size of the module area (A) or the size of the battery module (B) installed in the module area (A).

At least one space part Cv included in the temperature exchange part P2 is connected to each coolant flow path of the flow path part P4 located at the front and rear sides, respectively.

Referring to FIG. 10, the coolant flowing through each coolant flow path of the flow path part P4 located in front of the space part Cv is joined in the space part Cv. The joined coolant is dispersed to each coolant flow path of the flow path part P4 located at the rear of the space part Cv and moves to the next space part Cv.

### (second embodiment)

The battery pack 1000 according to the second embodiment of the present invention differs from the battery pack 1000 according to the first embodiment in the location where the inlet 211 and outlet 212 through which coolant flows in and out are installed.

The battery pack 1000 according to the second embodiment has a front frame 221 and a rear frame 222 coupled to the base plate 210 and coupled to a front end and a rear end of the base plate 210, respectively.

FIG. 11 is a perspective view of a battery pack 1000 according to a second embodiment of the present invention. Specifically, FIG. 11(a) shows a cooling cover 214 detached from a base plate 210, and FIG. 11(b) shows the cooling cover 214 coupled to the base plate 210.

The base plate (210) included in the battery pack (1000) includes a cooling cover (214) that is open at the front and back and is coupled to cover the openings with the open front and back sides.

The cooling cover 214 further includes a forwardly projecting protrusion part 215.

The protrusion part 215 is molded with an inlet 211 or outlet 212 through which coolant flows in and out.

The inlet 211 and the outlet 212 is connected to the inlet 211 are preferably located diagonally to each other on the base plate 210. Therefore, the protrusion part 215 disposed in the cooling cover 214, which includes the inlet 211 and is located at the front end of the base plate 210and the protrusion parts 215 disposed in the cooling cover 214, which includes the outlet 212 connected to the inlet 211, and is located at the rear end of the base plate 210, are positioned diagonally each other.

Referring to FIG. 11, a protrusion part 215 of the cooling cover 214 located at the front end of the base plate 210 is formed at one end of the two ends of the cooling cover 214 adjacent to the main-separation wall 231, and a protrusion part 215 of the cooling cover 214 opposite the cooling cover 214 and located at the rear end of the base plate 210 is formed at one end of the two ends of the cooling cover 214 adjacent to the side frame 223.

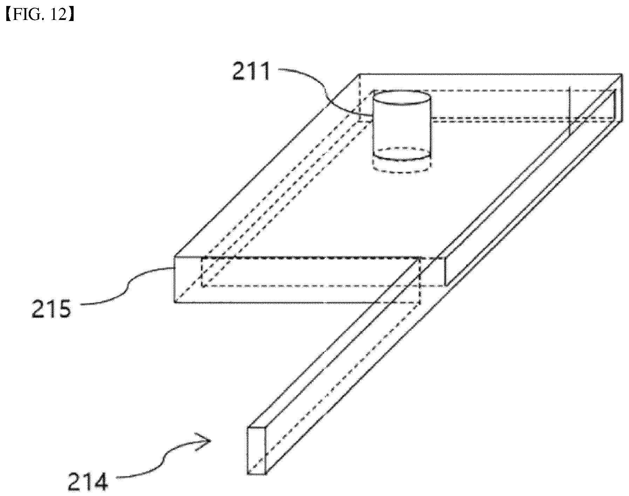

FIG. 12 illustrates a portion of the cooling cover 214 including the protrusion part 215. The protrusion part 215 projecting from the cooling cover 214 is in the form of an inlet 211 formed at the top and a hollow interior. Further, the interior hollow is open to one side and the coolant introduced through the inlet 211 flows through one side of the open protrusion part 215 to the inside of the base plate 210 coupled to the cooling cover 214.

### [Description of reference numerals]

10: (related art) top cover
20: (related art) base plate
30: (related art) side wall
40: (related art) inlet
50: (related art) outlet
60: (related art) auxiliary inlet
70: (related art) hose
80: (related art) flow path
1000: battery pack
100: top cover
200: pack case
210: base plate
211: inlet
211a: first inlet
211b: second inlet
212: outlet
212a: first outlet
212b: second outlet
213: separation wall
214: cooling cover
214a: first cooling cover
215: protrusion part
221: front frame
222: rear frame
223: side frame
231: main-separation wall
232: sub-separation wall
A: module area
A1: first module area
A2: second module area
B: battery module
Ct: coolant movement path
Cv: space part
d1: length direction of pack case
d2: width direction of pack case
P1: injection part
P2: temperature exchange part
P3: discharge part
P4: flow path part

## Claims

1. a battery pack (1000) for accommodating battery modules (B), comprising: a pack case (200) that comprises a module area (A) in which the battery modules (B) are mounted, and
wherein the pack case (200) including a base plate (20, 210) in the form of a hollow shape to support a lower part of a battery module (B) and having a plurality of space parts (Cv) formed therein for storing coolant; sidewalls (30) coupled to a rim of the base plate (20, 210); and separation wall (30) coupled to the base plate (20, 210) to separate the module area (A) for mounting the battery modules (B); wherein the separation walls (30) comprising: a main separation walls (30) extended and formed across the centered part of the pack case,
wherein the base plate (20, 210) includes at both ends an inlet and an outlet through which coolant can flow in and out and communicated with the space part (Cv), respectively,
wherein the base plate (20) further includes a flow path part (P4),
wherein the flow path part (P4) includes a plurality of cooling flow paths (P4) connecting the space parts (Cv) to each other between a pair of adjacent space parts (Cv),
wherein the base plate (30) comprises an injection part (P1) comprising a space part (Cv) formed at a front end of the base plate (20, 210) and directly communicated with the inlet (40, 211),
a discharge part comprising a space part (Cv) formed at a rear end of the base plate (20, 210) and directly communicated with the outlet (50, 212), and
a temperature exchange part (P2) comprising a plurality of space parts (Cv) formed at locations corresponding to each module area (A).

2. The battery pack (1000) of claim 1, wherein the coolant injected into the inlet (40, 211) is discharged through the space part (Cv) and the cooling flow path (80) to the outlet (50, 212).

3. The battery pack (1000) of claim 1, wherein the space parts (Cv) are formed separate at predetermined intervals along the length direction of the pack case (200).

4. The battery pack (1000) of claim 1, wherein each of the space parts (Cv) included in the temperature exchange part (P2) is formed corresponding to an area size of the module area (A).

5. The battery pack (1000) of claim 1, wherein any one of the space parts (Cv) included in the temperature exchange part (P2) is communicated with respective cooling flow paths (80) included in the flow path parts (P4) located at both ends of the space part (Cv), and
the coolant flowing through the respective cooling flow paths (80) of the flow path parts (P4) located at the front end of the space part (Cv) is joined in the space part (Cv), and
the coolant joined in the space part (Cv) is dispersed and moved to the respective cooling flow paths (80) of the flow path parts (P4) located at the rear end of the space part (Cv).

6. The battery pack (1000) of claim 1, wherein coolant injected into the space part (Cv) of the injection part (P1) through the inlet (40, 211) is dispersed and moved to the respective cooling flows of the flow path parts (P4) adjacent to the space part (Cv) of the injection part (P1), and
coolant moved through the respective cooling flow paths (80) adjacent to the space part (Cv) of the discharge part (P3) is joined in the space part (Cv) of the discharge part (P3) and discharged through the outlet (50, 212).

7. The battery pack (1000) of claim 1, wherein the space parts (Cv) and the flow path parts (P4) are formed alternately along the length direction of the pack case (200).

8. The battery pack (1000) of claim 1, wherein the pack case (200) further comprises a sub-separation wall (213), which is coupled at both ends to the main separation wall (231) and side wall (223) and coupled to the base plate (20, 210) to separate between a pair of adjacent battery modules (B); and the flow path part (P4) is disposed at locations corresponding to the sub-separation wall (232).

9. The battery pack (1000) of claim 1, wherein the flow path parts (P4) comprise a plurality of cooling flow paths (80), and the cooling flow paths (80) included in the flow path parts (P4) are arranged side by side along a width direction of the pack case (200).

10. The battery pack (1000) of claim 1, wherein the base plate (20, 210) comprises a pair of inlets (40, 211) at a front end and a pair of outlets (50, 212) at a rear end connected to each of the inlets (40, 211).

11. The battery pack (1000) of claim 10,
wherein the inlet (40, 211) comprises a first inlet (211a) formed on one side of the main-separation wall (231) wherein the first module area (A1) is located, and a second inlet (211b) formed on the other side of the main-separation wall (231) wherein the second module area (A2) is located, and
the outlet (50, 212) comprises a first outlet (212a) communicated with the first inlet (211a) on one side of the main-separation wall (231), and a second outlet (212b) communicated with the second inlet (211b) on the other side of the main-separation wall (231),
wherein the first inlet (211a) is positioned diagonally to the first outlet (212a) on one side of the main-separation wall (231), and the second inlet (211b) is positioned diagonally to the second outlet (212b) on the other side of the main-separation wall (231).

12. The battery pack (1000) of claim 1, wherein the base plate (20, 210) has an open front and rear side, and comprises a cooling cover (214) coupled to the open front and rear sides.

13. The battery pack (1000) of claim 12, wherein the cooling cover (214) comprises protrusions projecting forward, having a hollow shape, and the inlet (40, 211) and the outlet (50, 212) are installed in the protrusion parts (215) of the cooling cover (214) coupled to the front and rear sides of the pack case (200).

## Patentansprüche

1. Batteriepack (1000) zum Aufnehmen von Batteriemodulen (B), umfassend:
ein Packgehäuse (200), welches einen Modulbereich (A) umfasst, in welchem die Batteriemodule (B) montiert sind, und
wobei das Packgehäuse (200) eine Basisplatte (20, 210) in einer hohlen Form umfasst, um einen unteren Teil eines Batteriemoduls (B) zu stützen, und eine Mehrzahl von Raumteilen (Cv) zum Lagern eines Kühlmittels darin gebildet aufweist;
Seitenwände (30), welche mit einem Rand der Basisplatte (20, 210) gekoppelt sind; und
eine Trennwand (30), welche mit der Basisplatte (20, 210) gekoppelt ist, um den Modulbereich (A) zum Montieren der Batteriemodule (B) zu trennen;
wobei die Trennwände (30) umfassen:
eine Haupttrennwand (30), welche sich über den mittigen Teil des Packgehäuses erstreckt und über diesem gebildet ist,
wobei die Basisplatte (20, 210) an beiden Enden einen Einlass und einen Auslass umfasst, durch welche ein Kühlmittel rein und raus strömen kann, und welche jeweils mit dem Raumteil (Cv) kommunizieren,
wobei die Basisplatte (20) ferner einen Strömungswegteil (P4) umfasst,
wobei der Strömungswegteil (P4) eine Mehrzahl von Kühl-Strömungswegen (P4) umfasst, welche die Raumteile (Cv) zwischen einem Paar benachbarter Raumteile (Cv) miteinander verbinden,
wobei die Basisplatte (30) einen Injektionsteil (P1) umfasst, welcher einen Raumteil (Cv) umfasst, welcher an einem vorderen Ende der Basisplatte (20, 210) gebildet ist und direkt mit dem Einlass (40, 211) kommuniziert,
einen Ausgabeteil, welcher einen Raumteil (Cv) umfasst, welcher an einem hinteren Ende der Basisplatte (20, 210) gebildet ist und direkt mit dem Auslass (50, 212) kommuniziert, und
einen Temperaturaustauschteil (P2), welcher eine Mehrzahl von Raumteilen (Cv) umfasst, welche an Positionen gebildet sind, welche jedem Modulbereich (A) entsprechen.

2. Batteriepack (1000) nach Anspruch 1, wobei das Kühlmittel, welches in den Einlass (40, 211) injiziert wird, durch den Raumteil (Cv) und den Kühl-Strömungsweg (80) zu dem Auslass (50, 212) ausgegeben wird.

3. Batteriepack (1000) nach Anspruch 1, wobei die Raumteile (Cv) in vorbestimmten Abständen entlang der Längenrichtung des Packgehäuses (200) getrennt gebildet sind.

4. Batteriepack (1000) nach Anspruch 1, wobei jeder der Raumteile (Cv), welche in dem Temperaturaustauschteil (P2) umfasst sind, entsprechend einer Bereichsgröße des Modulbereichs (A) gebildet ist.

5. Batteriepack (1000) nach Anspruch 1, wobei ein jeglicher der Raumteile (Cv), welche in dem Temperaturaustauschteil (P2) umfasst sind, mit jeweiligen Kühl-Strömungswegen (80) kommuniziert, welche in den Strömungswegteilen (P4) umfasst sind, welche an beiden Enden des Raumteils (Cv) positioniert sind, und
wobei das Kühlmittel, welches durch die jeweiligen Kühl-Strömungswege (80) der Strömungswegteile (P4) strömt, welche an dem vorderen Ende des Raumteils (Cv) positioniert sind, in dem Raumteil (Cv) zusammenströmt, und
wobei das Kühlmittel, welches in dem Raumteil (Cv) zusammenströmt, verteilt wird und zu den jeweiligen Kühl-Strömungswegen (80) der Strömungswegteile (P4) bewegt wird, welche an dem hinteren Ende des Raumteils (Cv) angeordnet sind.

6. Batteriepack (1000) nach Anspruch 1, wobei das Kühlmittel, welches durch den Einlass (40, 211) in den Raumteil (Cv) des Injektionsteils (P1) injiziert wird, verteilt wird und zu den jeweiligen Kühl-Strömungen der Strömungswegteile (P4) bewegt wird, welche benachbart zu dem Raumteil (Cv) des Injektionsteils (P1) sind, und
wobei das Kühlmittel, welches durch die jeweiligen Kühl-Strömungswege (80) bewegt wird, welche benachbart zu dem Raumteil (Cv) des Ausgabeteils (P3) sind, in dem Raumteil (Cv) des Ausgabeteils (P3) zusammenströmt und durch den Auslass (50, 212) ausgegeben wird.

7. Batteriepack (1000) nach Anspruch 1, wobei die Raumteile (Cv) und die Strömungswegteile (P4) entlang der Längenrichtung des Packgehäuses (200) alternierend gebildet sind.

8. Batteriepack (1000) nach Anspruch 1, wobei das Packgehäuse (200) ferner eine Untertrennwand (213) umfasst, welche an beiden Enden mit der Haupttrennwand (231) und der Seitenwand (223) gekoppelt ist und welche mit der Basisplatte (20, 210) gekoppelt ist, um zwischen einem Teil benachbarter Batteriemodule (B) zu trennen; und wobei der Strömungswegteil (P4) an Positionen angeordnet ist, welche der Untertrennwand (232) entsprechen.

9. Batteriepack (1000) nach Anspruch 1, wobei die Strömungswegteile (P4) eine Mehrzahl von Kühl-Strömungswegen (80) umfassen, und wobei die Kühl-Strömungswege (80), welche in den Strömungswegteilen (P4) umfasst sind, entlang einer Breitenrichtung des Packgehäuses (200) nebeneinander angeordnet sind.

10. Batteriepack (1000) nach Anspruch 1, wobei die Basisplatte (20, 210) an einem vorderen Ende ein Paar von Einlässen (40, 211) und an einem hinteren Ende ein Paar von Auslässen (50, 212) umfasst, welche mit jedem der Einlässe (40, 211) verbunden sind.

11. Batteriepack (1000) nach Anspruch 10, wobei der Einlass (40, 211) einen ersten Einlass (211a), welcher an einer Seite der Haupttrennwand (231) gebildet ist, wo der erste Modulbereich (A1) positioniert ist, und einen zweiten Einlass (211b) umfasst, welcher an der anderen Seite der Haupttrennwand (231) gebildet ist, wo der zweite Modulbereich (A2) positioniert ist, und
wobei der Auslass (50, 212) einen ersten Auslass (212a), welcher mit dem ersten Einlass (211a) an einer Seite der Haupttrennwand (231) kommuniziert, und einen zweiten Auslass (212b) umfasst, welcher mit dem zweiten Einlass (211b) an der anderen Seite der Haupttrennwand (231) kommuniziert,
wobei der erste Einlass (211a) an einer Seite der Haupttrennwand (231) diagonal zu dem ersten Auslass (212a) positioniert ist, und wobei der zweite Einlass (211b) an der anderen Seite der Haupttrennwand (231) diagonal zu dem zweiten Auslass (212b) positioniert ist.

12. Batteriepack (1000) nach Anspruch 1, wobei die Basisplatte (20, 210) eine offene vordere und hintere Seite aufweist und eine Kühlabdeckung (214) umfasst, welche mit der offenen vorderen und hinteren Seite gekoppelt ist.

13. Batteriepack (1000) nach Anspruch 12, wobei die Kühlabdeckung (214) Vorsprünge umfasst, welche nach vorne hervorstehen und welche eine hohle Form aufweisen, und wobei der Einlass (40, 211) und der Auslass (50, 212) in den Vorsprungsteilen (215) der Kühlabdeckung (214) installiert sind, welche mit den vorderen und hinteren Seiten des Packgehäuses (200) gekoppelt sind.

## Revendications

1. Bloc-batterie (1000) pour loger des modules de batterie (B), comprenant : un boîtier (200) de bloc-batterie qui comprend une zone de module (A) dans laquelle sont montés les modules de batterie (B), et
dans lequel le boîtier (200) de bloc-batterie incluant une plaque de base (20, 210) sous forme de structure creuse pour supporter une partie inférieure d'un module de batterie (B) et présentant une pluralité de parties évidées (Cv) formées à l'intérieur de celui-ci pour stocker un agent réfrigérant ; des parois latérales (30) couplées à un rebord de la plaque de base (20, 210) ; et une paroi de séparation (30) couplée à la plaque de base (20, 210) pour délimiter la zone de module (A) destinée au montage des modules de batterie (B) ; dans lequel les parois de séparation (30) comprennent : des parois de séparation principales (30) s'étendant et formées sur la partie centrale du boîtier de bloc-batterie,
dans lequel la plaque de base (20, 210) inclut aux deux extrémités une entrée et une sortie à travers lesquelles l'agent réfrigérant peut entrer et sortir, et en communication avec la partie évidée (Cv), respectivement,
dans lequel la plaque de base (20) inclut en outre une partie de trajet d'écoulement (P4),
dans lequel la partie de trajet d'écoulement (P4) inclut une pluralité de trajets d'écoulement de refroidissement (P4) reliant les parties évidées (Cv) entre elles entre une paire de parties évidées (Cv) adjacentes,
dans lequel la plaque de base (30) comprend une partie d'injection (P1) comprenant une partie évidée (Cv) formée à une extrémité avant de la plaque de base (20, 210) et en communication directe avec l'entrée (40, 211),
une partie d'évacuation comprenant une partie évidée (Cv) formée à une extrémité arrière de la plaque de base (20, 210) et en communication directe avec la sortie (50, 212), et
une partie d'échange de température (P2) comprenant une pluralité de parties évidées (Cv) formées en des emplacements correspondant à chaque zone de module (A).

2. Bloc-batterie (1000) selon la revendication 1, dans lequel l'agent réfrigérant injecté dans l'entrée (40, 211) est évacué à travers la partie évidée (Cv) et le trajet d'écoulement de refroidissement (80) vers la sortie (50, 212).

3. Bloc-batterie (1000) selon la revendication 1, dans lequel les parties évidées (Cv) sont formées séparément à des intervalles prédéterminés le long du sens de la longueur du boîtier (200) de bloc-batterie.

4. Bloc-batterie (1000) selon la revendication 1, dans lequel chacune des parties évidées (Cv) incluses dans la partie d'échange de température (P2) est formée en correspondance avec une taille de surface de la zone de module (A).

5. Bloc-batterie (1000) selon la revendication 1, dans lequel l'une quelconque des parties évidées (Cv) incluses dans la partie d'échange de température (P2) communique avec des trajets d'écoulement de refroidissement (80) respectifs inclus dans les parties de trajet d'écoulement (P4) situées aux deux extrémités de la partie évidée (Cv), et
l'agent réfrigérant circulant à travers les trajets d'écoulement de refroidissement (80) respectifs des parties de trajet d'écoulement (P4) situées à l'extrémité avant de la partie évidée (Cv) se jette dans la partie évidée (Cv), et
l'agent réfrigérant se jetant dans la partie évidée (Cv) est dispersé et transféré vers les trajets d'écoulement de refroidissement (80) respectifs des parties de trajet d'écoulement (P4) situées à l'extrémité arrière de la partie évidée (Cv).

6. Bloc-batterie (1000) selon la revendication 1, dans lequel un agent réfrigérant injecté dans la partie évidée (Cv) de la partie d'injection (P1) à travers l'entrée (40, 211) est dispersé et transféré vers les écoulements de refroidissement respectifs des parties de trajet d'écoulement (P4) adjacentes à la partie évidée (Cv) de la partie d'injection (P1), et
l'agent réfrigérant transféré à travers les trajets d'écoulement de refroidissement (80) respectifs adjacents à la partie évidée (Cv) de la partie d'évacuation (P3) se jette dans la partie évidée (Cv) de la partie d'évacuation (P3) et est évacué par la sortie (50, 212).

7. Bloc-batterie (1000) selon la revendication 1, dans lequel les parties évidées (Cv) et les parties de trajet d'écoulement (P4) sont formées alternativement le long du sens de la longueur du boîtier (200) de bloc-batterie.

8. Bloc-batterie (1000) selon la revendication 1, dans lequel le boîtier (200) de bloc-batterie comprend en outre une paroi de séparation secondaire (213), qui est couplée aux deux extrémités à la paroi de séparation principale (231) et à la paroi latérale (223) et couplée à la plaque de base (20, 210) pour séparer une paire de modules de batterie adjacents (B) ; et la partie de trajet d'écoulement (P4) est disposée en des emplacements correspondant à la paroi de séparation secondaire (232).

9. Bloc-batterie (1000) selon la revendication 1, dans lequel les parties de trajet d'écoulement (P4) comprennent une pluralité de trajets d'écoulement de refroidissement (80), et les trajets d'écoulement de refroidissement (80) inclus dans les parties de trajet d'écoulement (P4) sont agencés côte à côte le long du sens de la largeur du boîtier (200) de bloc-batterie.

10. Bloc-batterie (1000) selon la revendication 1, dans lequel la plaque de base (20, 210) comprend une paire d'entrées (40, 211) à une extrémité avant et une paire de sorties (50, 212) à une extrémité arrière reliées à chacune des entrées (40, 211).

11. Bloc-batterie (1000) selon la revendication 10,
dans lequel l'entrée (40, 211) comprend une première entrée (211a) formée d'un côté de la paroi de séparation principale (231), où se trouve la première zone de module (A1), et une seconde entrée (211b) située de l'autre côté de la paroi de séparation principale (231), où se trouve la seconde zone de module (A2), et
la sortie (50, 212) comprend une première sortie (212a) communiquant avec la première entrée (211a) d'un côté de la paroi de séparation principale (231), et une seconde sortie (212b) communiquant avec la seconde entrée (211b) de l'autre côté de la paroi de séparation principale (231),
dans lequel la première entrée (211a) est placée en diagonale par rapport à la première sortie (212a) d'un côté de la paroi de séparation principale (231), et la seconde entrée (211b) est placée en diagonale par rapport à la seconde sortie (212b) de l'autre côté de la paroi de séparation principale (231).

12. Bloc-batterie (1000) selon la revendication 1, dans lequel la plaque de base (20, 210) présente un côté avant et un côté arrière ouverts, et comprend un couvercle de refroidissement (214) couplé aux côtés avant et arrière ouverts.

13. Bloc-batterie (1000) selon la revendication 12, dans lequel le couvercle de refroidissement (214) comprend des saillies en saillie vers l'avant, présentant une forme creuse, et l'entrée (40, 211) et la sortie (50, 212) sont installées dans les parties saillantes (215) du couvercle de refroidissement (214) couplées aux côtés avant et arrière du boîtier (200).
